Europäisches Patentamt

European Patent Office

Office européen des brevets

(11) Numéro de publication : **0 022 411**
**B1**

(12) **FASCICULE DE BREVET EUROPÉEN**

(45) Date de publication du fascicule du brevet :
11.05.83

(51) Int. Cl.³ : **F 16 D 23/04**

(21) Numéro de dépôt : **80401016.3**

(22) Date de dépôt : **03.07.80**

(54) **Perfectionnements aux dispositifs de changement de vitesses, notamment pour l'engagement de la marche arrière.**

(30) Priorité : 06.07.79 FR 7917665

(43) Date de publication de la demande :
14.01.81 Bulletin 81/02

(45) Mention de la délivrance du brevet :
11.05.83 Bulletin 83/19

(84) Etats contractants désignés :
DE GB IT

(56) Documents cités :
DE B 2 018 399
FR A 2 409 419

(73) Titulaire : **SOCIETE ANONYME AUTOMOBILES CITROEN**
**117 à 167, Quai André Citroen**
**F-75747 Paris Cedex 15 (FR)**
**AUTOMOBILES PEUGEOT**
**75, avenue de la Grande Armée**
**F-75116 Paris (FR)**

(72) Inventeur : **Schiler, Daniel**
**16, Allée des Capucines Cressely**
**F-78470 Saint-Remy-les-Chevreuse (FR)**

(74) Mandataire : **Michardière, Bernard et al**
**Cabinet Plasseraud 84, rue d'Amsterdam**
**F-75009 Paris (FR)**

Jouve, 18, rue St-Denis, 75001 Paris, France

## Perfectionnements aux dispositifs de changement de vitesses, notamment pour l'engagement de la marche arrière

L'invention est relative à des perfectionnements apportés aux dispositifs de changement de vitesses, du genre de ceux qui comprennent, montés dans un carter :

— un premier pignon solidaire d'un arbre primaire ;

— un deuxième pignon solidaire d'un arbre secondaire ;

— un pignon baladeur, notamment de marche arrière, monté coulissant sur un axe solidaire du carter et propre à être déplacé, par un organe d'entraînement, entre une position neutre et une position active où ledit pignon baladeur, en prise avec le premier pignon, engrène avec le second pignon, ce pignon baladeur étant en prise permanente avec le premier pignon ;

— des moyens de freinage du pignon baladeur comportant un manchon monté coulissant sur ledit axe et susceptible d'être animé par rapport à cet axe d'un mouvement de rotation limité par un doigt solidaire de l'axe et coopérant avec une fente axiale du manchon, ledit manchon portant une surface tronconique coopérant avec une surface tronconique complémentaire formée sur le pignon baladeur, ces moyens de freinage intervenant au moins pendant une phase transitoire correspondant au passage de la position neutre à la position active.

L'invention concerne plus particulièrement, parce que c'est dans ce cas que son application semble devoir présenter le plus d'intérêt, mais non exclusivement, les dispositifs de changement de vitesses pour véhicules automobiles.

Le document FR-A-2 409 419 montre un dispositif de ce genre dans lequel les moyens de freinage comprennent un anneau de freinage muni, d'une part, de dents propres à pénétrer dans des rainures de guidage prévues sur un prolongement du pignon baladeur, et, d'autre part, d'un cône de synchronisation propre à coopérer avec un cône interne d'un manchon immobile. Bien que ce cône de synchronisation ne soit appliqué positivement contre le cône du manchon immobile que pendant le processus de synchronisation, avec apparition d'un frottement important entre ces deux cônes, il n'en demeure pas moins que les surfaces des deux cônes restent au voisinage l'une de l'autre en dehors du processus de synchronisation et peuvent venir frotter l'une sur l'autre.

Il peut en résulter une usure relativement rapide de ces surfaces conduisant à une diminution de l'efficacité des moyens de freinage.

L'invention a pour but, surtout, de rendre les dispositifs de changement de vitesses du genre en question tels qu'ils répondent mieux que jusqu'à présent aux diverses exigences de la pratique et notamment tels qu'ils ne présentent plus ou à un degré moindre les inconvénients mentionnés ci-dessus.

Selon l'invention, un dispositif de changement de vitesse du genre défini précédemment est caractérisé par le fait que des moyens d'écartement sont prévus pour écarter la surface tronconique du manchon de celle du pignon baladeur lorsque ce dernier se trouve dans une position neutre ou active.

Avantageusement, le pignon baladeur est monté sur le manchon ; des moyens d'entraînement du manchon par le pignon sont prévus avec un jeu axial, et les moyens d'écartement comprennent un dispositif de positionnement du manchon sur ledit axe à deux positions séparées, notamment, par une distance supérieure à celle parcourue par le pignon baladeur entre sa position neutre et sa position active.

Le dispositif de positionnement comprend, de préférence, un pion, orienté radialement, disposé dans un logement prévu dans le susdit axe, et poussé élastiquement vers l'extérieur, l'extrémité extérieure, arrondie, de ce pion étant propre à coopérer avec deux évidements prévus sur la surface intérieure du manchon et séparés axialement l'un de l'autre par un épaulement propre à effacer le pion dans son logement, la coopération du pion avec un évidement déterminant une position axiale pour le manchon, la distance entre les deux positions axiales ainsi déterminées étant supérieure à la distance parcourue par le pignon baladeur.

Le pignon baladeur peut être monté sur le manchon par l'intermédiaire d'une bague à faible coefficient de frottement.

La surface tronconique du manchon est alors prévue à l'extérieur, à une extrémité de ce manchon, tandis que la surface tronconique du pignon baladeur est prévue sur une surface intérieure de ce pignon, les moyens d'entraînement du pignon par le manchon comprenant une bague élastique ancrée dans cette surface intérieure du pignon, propre à coopérer avec l'extrémité du manchon.

Le pignon baladeur peut être monté directement sur le manchon, notamment lorsque ce manchon est réalisé en une matière appropriée, par exemple en fritté à prédominance bronze ; la surface tronconique du manchon est alors prévue à l'intérieur d'un anneau tronconique rapporté à une extrémité du manchon, tandis que la surface tronconique du pignon baladeur est prévue sur une surface extérieure de ce pignon ; les moyens d'entraînement du pignon par le manchon peuvent comprendre un jonc élastique ancré autour du manchon et emprisonné dans une gorge du pignon, avec un jeu axial.

L'invention sera décrite en détail avec référence aux dessins ci-annexés.

La figure 1 de ces dessins est une coupe longitudinale schématique d'un dispositif de changement de vitesses conforme à l'invention, avec le pignon baladeur en position neutre.

La figure 2 est une coupe simplifiée du dispositif de la figure 1, avec le pignon baladeur en position active.

La figure 3 est une coupe suivant III-III de l'axe et du manchon.

La figure 4 est une coupe suivant IV-IV de l'axe et du manchon.

La figure 5, enfin, est une coupe longitudinale, schématique d'un autre mode de réalisation du dispositif de changement de vitesses.

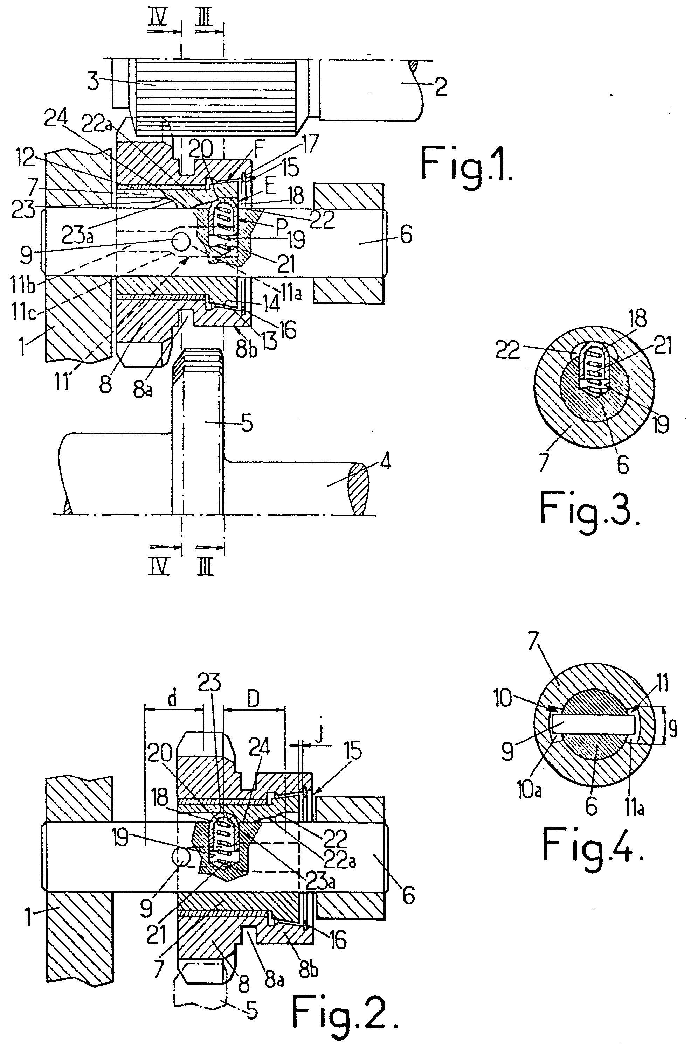

En se reportant aux dessins, et plus particulièrement à la figure 1, on peut voir un dispositif de changement de vitesses, pour véhicule automobile, comprenant, montés dans un carter 1, un arbre primaire 2 relié au moteur par l'intermédiaire d'un embrayage (non montré) et portant un premier pignon 3 solidaire en rotation de cet arbre. Le dispositif comprend également un arbre secondaire 4 lié en rotation aux roues motrices du véhicule et portant un deuxième pignon 5 solidaire en rotation de cet arbre.

Un axe 6 est solidaire du carter 1 ; sur cet axe est monté un manchon 7 et sur ce manchon un pignon baladeur 8, en particulier de marche arrière. Ce pignon est propre à être déplacé entre une position neutre, représentée sur la figure 1, où ledit pignon 8 n'engrène pas avec le second pignon 5, et une position active représentée sur la figure 2, où le pignon 8, tout en étant en prise avec le premier pignon 3, engrène avec le second pignon 5.

Les déplacements en coulissement du pignon baladeur 8 sont commandés par un organe d'entraînement tel qu'une fourchette (non représentée) propre à coopérer avec une gorge 8a prévue à la périphérie d'un prolongement cylindrique 8b du pignon 8.

Ce pignon baladeur 8 reste en prise permanente avec le premier pignon 3 ; dans la position neutre de la figure 1, le pignon 8 engrène donc avec ce pignon 3.

Des moyens de freinage F du pignon baladeur 8 par rapport à l'axe fixe 6 sont prévus et comprennent, outre le manchon 7 monté coulissant sur l'axe 6, un doigt 9 solidaire de l'axe 6 propre à coopérer avec le manchon 7 pour limiter le mouvement de rotation possible de ce manchon par rapport à l'axe 6.

Comme bien visible sur la figure 4, le doigt 9 traverse complètement, suivant un diamètre, l'axe 6 et fait saillie à ses deux extrémités, sur la surface extérieure de l'axe. Les extrémités du doigt 9 sont propres à coopérer avec deux rainures 10, 11 diamétralement opposées prévues sur la surface intérieure du manchon 7. L'étendue périphérique $g$ (fig. 4) des rainures 10, 11, est supérieure au diamètre du doigt 9 dans la partie axiale 10a, 11a de ces rainures située du côté de l'extrémité du pignon baladeur 8 munie des moyens de freinage F.

Le doigt 9 se trouve au niveau axial de cette partie 10a, 11a lorsque le pignon baladeur 8 est en position neutre. On comprend que le manchon 7 et le pignon baladeur 8 peuvent effectuer un mouvement de rotation limité jusqu'à ce que le doigt 9 vienne en butée contre les bords des parties 10a, 11a, des rainures. Ces dernières se prolongent, du côté opposé aux moyens de freinage F par une partie telle que 11b (fig. 1) dont le diamètre est égal à celui du doigt 9.

Les parties 10a, 11a, des rainures sont reliées aux parties telles que 11b, par des rampes telles que 11c.

Une bague 12 à faible coefficient de frottement, par exemple en matière plastique auto-lubrifiante telle que du polytétrafluoréthylène, est disposée entre le pignon baladeur et le manchon 7. Ce manchon porte à sa périphérie extérieure une surface tronconique 13 propre à coopérer avec une surface complémentaire 14 prévue sur la surface intérieure du prolongement 8b du pignon 8. Ces surfaces tronconiques 13 et 14 appartiennent aux moyens de freinage F ; la venue en contact de ces deux surfaces permet de freiner le pignon 8 par rapport au manchon 7.

Des moyens d'écartement E sont prévus pour écarter la surface tronconique 13 du manchon 7 de celle 14 du pignon baladeur 8 lorsque ce dernier se trouve dans la position neutre ou active ; les moyens de freinage interviennent au moins pendant une phase transitoire correspondant au passage de la position neutre à la position active.

Dans le mode de réalisation particulier, décrit avec référence aux dessins, le pignon baladeur 8 est en prise permanente avec le premier pignon 3, et les moyens d'écartement E sont propres à écarter les deux surfaces tronconiques 13 et 14 aussi bien lorsque le pignon 8 est dans sa position neutre que dans sa position active.

Des moyens d'entraînement 15 du manchon 7, par le pignon 8 sont prévus avec un jeu axial $j$ (fig. 2). Ces moyens d'entraînement comprennent une bague élastique 16, fendue, engagée dans une gorge 17 prévue à l'extrémité de la surface intérieure tronconique 14 du pignon 8.

L'entraînement du manchon 7 par le pignon 8, de la gauche vers la droite de la figure 1, est assuré par la venue en contact des surfaces 13 et 14, la surface 14 poussant la surface 13 et le manchon 7 vers la droite ; le jeu axial $j$ entre la face extrême du manchon 7 et la bague 16 est alors maximal. Le retour du manchon 7 vers la gauche de la figure 1 est obtenu lorsque le pignon 8 est ramené de sa position active à sa position neutre, par coopération de la bague 16 avec la face extrême du manchon 7. Le jeu $j$ est alors nul, tandis que l'écartement entre les surfaces tronconiques 13 et 14 est maximal.

Les moyens d'écartement E comprennent un dispositif de positionnement P du manchon 7 sur l'axe 6, à deux positions séparées par une distance D supérieure à la distance $d$ parcourue par le pignon baladeur 8 entre sa position neutre et sa position active.

Le dispositif de positionnement P comprend un pion 18 orienté radialement, disposé dans un logement radial 19 prévu dans l'axe 6. Le pion 18 est creux et est fermé, vers l'extérieur, par une extrémité arrondie 20 propre à coopérer avec la surface intérieure du manchon 7.

Le pion 18 est poussé élastiquement vers l'extérieur par un ressort 21 logé à l'intérieur du pion et prenant appui contre l'extrémité fermée du logement 19.

La surface intérieure du manchon 7 comporte deux encoches 22, 23, de forme concave appropriée destinées à coopérer avec l'extrémité arrondie du pion 18 de manière à assurer l'arrêt du manchon 7, par rapport à l'axe 6, dans l'une des deux positions séparées par la distance D.

Lorsque le pion 18 coopère avec l'encoche 22, le pignon 8 est en position neutre et le manchon 7 occupe la position correspondante ; lorsque le pion 18 coopère avec l'encoche 23 (fig. 2) le pignon 8 est en position active et le manchon 7 occupe la position correspondante.

Comme visible sur la figure 3, les encoches 22, 23 ont une section transversale supérieure à celle du pignon 18, de manière à permettre le mouvement de rotation limité du manchon 7 par rapport à l'axe 6.

Les encoches 22, 23 sont séparées, dans le sens axial, par un épaulement 24 de la surface intérieure du manchon 7, faisant saillie radialement vers l'intérieur. Les encoches 22, 23 se raccordent à l'épaulement 24 par des rampes d'armement 22a, 23a.

Le fonctionnement du dispositif des figures 1 à 4 est le suivant.

Lorsque le dispositif de changement de vitesses est au point mort, le pignon baladeur 8 se trouve dans sa position neutre représentée sur la figure 1, où il est en prise avec le pignon 3 solidaire de l'arbre primaire 2. Comme expliqué précédemment, bien que le moteur soit débrayé de l'arbre 2, le couple résiduel de l'embrayage provoque la rotation de cet arbre 2, le pignon 8 tourne librement sur la bague 12, par rapport au manchon 7. Le pignon 5, solidaire de l'arbre secondaire 4 lié en rotation aux roues, est arrêté.

Lors du passage de la marche arrière, le pignon baladeur 8 est déplacé (par l'intermédiaire de la fourchette non montrée) vers sa position active, en direction du pignon 5.

Le manchon 7 est arrêté axialement, par le pion 18 qui coopère avec l'encoche 22. De ce fait, le début de la course du pignon 8 vers sa position active entraîne un coulissement relatif du pignon 8 par rapport au manchon 7 et un rapprochement des surfaces tronconiques 13 et 14.

Lorsque ces deux surfaces tronconiques 13 et 14 entrent en contact, le manchon 7 est entraîné en rotation par le pignon 8 jusqu'à ce qu'un des bords des parties 10a, 11a des rainures 10, 11 vienne en contact avec le doigt 9 (fig. 4).

Le pignon baladeur 8 qui est arrêté dans son mouvement de translation par le manchon 7 (lequel d'une part, coopère avec le pion 18 et d'autre part, par les rampes telles que 11c, avec le doigt 9), se trouve alors freiné en rotation et, avec lui, le pignon 3 et l'arbre primaire 2.

Lorsque tout l'ensemble est arrêté en rotation, le pignon baladeur 8 peut poursuivre son mouvement de translation en entraînant le manchon 7 ; le pion 18 est effacé, par la rampe 22a et l'épaulement 24, dans son logement 19, tandis que le doigt 9 s'engage dans les parties telles que 11b des rainures 10, 11.

Pendant la poursuite de ce mouvement de translation, le pignon 8 est arrêté en rotation par rapport à l'axe 6, grâce aux moyens de freinage F.

Lorsque le pignon baladeur 8 arrive en prise avec le pignon 5, l'épaulement 24 a franchi le pion 18 qui, sous l'action du ressort 21, exerce une pression vers l'extérieur contre la rampe inclinée 23a ; sous l'effet de cette pression, le manchon 7 continue à se déplacer vers la droite, alors que le pignon 8 est arrêté en position active de marche arrière. Le déplacement du manchon 7 se poursuit jusqu'à ce que l'extrémité arrondie du pion 18 pénètre dans l'encoche 23. Les surfaces tronconiques 13 et 14 sont ainsi écartées l'une de l'autre, dans le sens axial, et leur contact est supprimé pendant la marche arrière.

Lors du désengagement de la marche arrière, le pignon baladeur est ramené vers la gauche des figures, en position neutre, par la fourchette. Le manchon 7 est ramené dans la position correspondante grâce à la coopération de la bague 16 et de l'extrémité de ce manchon. Le pion 18 est effacé dans son logement 19, par la rampe 23a. Lorsque l'épaulement 24 a franchi le pion 18, ce dernier vient se loger dans l'encoche 22 pour arrêter le manchon 7 dans la position correspondant à la position neutre du pignon 8. L'ensemble est agencé de manière que dans cette position neutre, les surfaces 13 et 14 ne soient pas en contact.

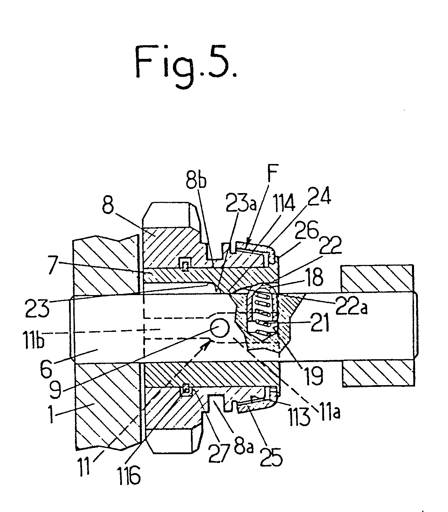

En se reportant à la figure 5, on peut voir une variante de réalisation du dispositif de changement de vitesses selon l'invention.

Les éléments identiques à des éléments déjà décrits avec référence aux figures 1 à 4 sont désignés par les mêmes références numériques.

Les éléments modifiés par rapport à la réalisation des figures 1 à 4, éléments dont il va être question ci-après, sont désignés par les références numériques d'éléments des figures 1 à 4, ayant des fonctions semblables, augmentées du nombre 100.

La surface tronconique 114 est réalisée sur la surface extérieure de l'extrémité du prolongement 8b du pignon 8, tandis que la surface tronconique 113 est réalisée sur la surface intérieure d'un anneau tronconique 25 rapporté sur l'extrémité du manchon 7 et arrêté axialement par un épaulement 26 de ce manchon.

La liaison en rotation de l'anneau 25 et du manchon 7 est assurée par un système de dents et de cannelures complémentaires prévues à la périphérie du manchon et dans l'ouverture de l'anneau entourant le manchon.

Le manchon 7 est réalisé en une matière à faible coefficient de frottement, notamment en fritté à prédominance bronze, ce qui permet de supprimer la bague 12, à faible coefficient de frottement, prévue sur les figures 1 et 2. Le pignon 8 est donc monté directement autour du manchon 7.

La bague élastique 16 des figures 1 et 2 est remplacée par un jonc 116 ancré dans une rainure prévue à la périphérie du manchon 7 et disposé dans une gorge 27 annulaire prévue dans l'alésage intérieur du pignon baladeur 8 ; la largeur de cette gorge 27 est supérieure au diamètre du jonc 116 de manière à permettre les déplacements supplémentaires du manchon 7, par rapport au pignon 8, assurant l'écartement des surfaces tronconiques 113 et 114.

Le fonctionnement est identique à celui du mode de réalisation des figures 1 à 4.

Les surfaces tronconiques 113 et 114 ne viennent en contact que pendant la phase transitoire correspondant au passage du pignon baladeur 8 de la position neutre à la position active. Le freinage en rotation de ce pignon 8 est alors assuré.

Lors du désengagement de la marche arrière, l'entraînement du manchon 7 par le pignon 8 est assuré par le jonc 116 qui coopère avec la gorge 27.

Quel que soit le mode de réalisation adopté, les surfaces tronconiques des moyens de freinage F ne viennent frotter l'une contre l'autre que pendant une phase transitoire de courte durée, de telle sorte que l'usure de ces surfaces est réduite et l'efficacité des moyens de freinage F est conservée alors que le temps de fonctionnement du dispositif de changement de vitesses augmente.

Le montage du pignon 8 en prise avec le pignon 3 en position neutre permet de réduire au minimum la course axiale nécessaire audit pignon 8 pour engrener avec le pignon 5. Il en résulte une réduction de l'encombrement axial du dispositif, sans inconvénient sur le maintien de son efficacité dans le temps puisque les surfaces tronconiques 13, 14 sont écartées l'une de l'autre lorsque le pignon 8 est en position neutre.

Le montage du pignon 8 autour du manchon 7 contribue, également, à réduire l'encombrement du dispositif.

## Revendications

1. Dispositif de changement de vitesses, notamment pour véhicule automobile comprenant montés dans un carter :
— un premier pignon (3) solidaire d'un arbre primaire ;
— un deuxième pignon (5) solidaire d'un arbre secondaire ;
— un pignon baladeur (8), notamment de marche arrière, monté coulissant sur un axe (6) solidaire du carter et propre à être déplacé, par un organe d'entraînement, entre une position neutre et une position active où ledit pignon baladeur, en prise avec le premier pignon, engrène avec le second pignon, ce pignon baladeur (8) étant en prise permanente avec le premier pignon (3) ;
— des moyens de freinage (F) du pignon baladeur comportant un manchon (7) monté coulissant sur ledit axe (6) et susceptible d'être animé par rapport à cet axe d'un mouvement de rotation limité par un doigt (9) solidaire de l'axe et coopérant avec une fente axiale du manchon, ledit manchon portant une surface tronconique (13, 113) coopérant avec une surface tronconique complémentaire (14, 114) formée sur le pignon baladeur, ces moyens de freinage (F) intervenant au moins pendant une phase transitoire correspondant au passage de la position neutre à la position active, caractérisé par le fait que des moyens d'écartement (E) sont prévus pour écarter la surface tronconique (13, 113) du manchon de celle (14, 114) du pignon baladeur lorsque ce dernier se trouve dans une position neutre ou active.

2. Dispositif selon la revendication 1, caractérisé par le fait que le pignon baladeur (8) est monté sur le manchon (7), que des moyens d'entraînement (15) du manchon (7) par le pignon sont prévus avec un jeu axial (j) et que les moyens d'écartement (E) comprennent un dispositif de positionnement (P) du manchon (7) sur ledit axe (6) à deux positions séparées, notamment par une distance (D) supérieure à celle (d) parcourue par le pignon baladeur entre sa position neutre et sa position active.

3. Dispositif selon la revendication 2, caractérisé par le fait que le dispositif de positionnement (P) comprend un pion (18) orienté radialement, disposé dans un logement (19) prévu dans le susdit axe, et poussé élastiquement vers l'extérieur, l'extrémité extérieure (20), arrondie, de ce pion étant propre à coopérer avec deux évidements (22, 23) prévus sur la surface intérieure du manchon et séparés axialement l'un de l'autre par un épaulement (24) propre à effacer le pion (18) dans son logement, la coopération du pion (18) avec un évidement déterminant une position axiale pour le manchon (7), la distance entre les deux positions axiales ainsi déterminées étant supérieure à la distance parcourue par le pignon baladeur (8).

4. Dispositif selon la revendication 2 ou 3, caractérisé par le fait que le pignon baladeur (8) est monté sur le manchon (7) par l'intermédiaire d'une bague (12) à faible coefficient de frottement.

5. Dispositif selon la revendication 4, caractérisé par le fait que la surface tronconique (13) du manchon (7) est prévue à l'extérieur, à une extrémité de ce manchon, tandis que la surface tronconique (14) du pignon baladeur (8) est prévue sur une surface intérieure de ce pignon, les moyens d'entraînement (15) du pignon par le manchon comprenant une bague élastique (16) ancrée dans cette surface intérieure du pignon, propre à coopérer avec l'extrémité du manchon.

6. Dispositif selon la revendication 2 ou 3, caractérisé par le fait que le pignon baladeur (8) est monté directement sur le manchon (7), ce manchon étant notamment réalisé en fritté à prédominance bronze, la surface tronconique (113) du manchon étant prévue à l'intérieur d'un anneau tronconique (25) rapporté à une extrémité du manchon, tandis que la surface tronconique (114) du pignon baladeur est prévue sur une surface extérieure de ce pignon (8).

7. Dispositif selon la revendication 6, caractérisé par le fait que les moyens d'entraînement du pignon (8) par le manchon (7) comprennent un jonc élastique (116) ancré autour du manchon et emprisonné dans une gorge (27) du pignon, avec un jeu axial.

## Claims

1. A gear-change device, more particularly for a motor vehicle, comprising, mounted in a casing :
— a first gearwheel (3) secured to a primary shaft ;
— a second gearwheel (5) secured to a secondary shaft ;
— a sliding gearwheel (8), more particularly for reversing, mounted slidably on a shaft (6) secured to the casing and adapted to be moved, by a driving means, between a neutral position and an operative position in which the said sliding gearwheel meshing with the first gearwheel engages the second gearwheel, said sliding gearwheel (8) being permanently in mesh with the first gearwheel (3) ;
— braking means (F) for the sliding gearwheel, comprising a sleeve (7) mounted slidably on said shaft (6) and adapted to be driven in relation to said shaft with a limited rotary movement by means of a finger (9) secured to the shaft and co-operating with an axial slot in the sleeve, said sleeve having a frusto-conical surface (13, 113) co-operating with a matching frusto-conical surface (14, 114) formed on the sliding gearwheel, said braking means (F) coming into operation at least during a transient phase corresponding to passage from the neutral position to the operative position, characterised in that means (E) are provided to move the frusto-conical surface (13, 113) of the sleeve away from the frusto-conical surface (14, 114) of the sliding gearwheel when the latter is in a neutral or operative position.

2. A device according to claim 1, characterised in that the sliding gearwheel (8) is mounted on the sleeve (7), means (15) for driving the sleeve (7) by the gearwheel are provided with an axial clearance (j) and the means (E) for moving the frusto-conical surface (13, 113) of the sleeve away from the frusto-conical surface (14, 114) of the sliding gearwheel comprise a device (P) for positioning the sleeve (7) on said shaft (6) in two positions separated inter alia by a distance (D) greater than that (d) traversed by the sliding gearwheel between its neutral position and its operative position.

3. A device according to claim 2, characterised in that the positioning device (P) comprises a radially oriented stud (18) disposed in a recess (19) provided in said shaft and urged elastically outwards, the outer rounded end (20) of said stud being adapted to co-operate with two cavities (22, 23) provided on the inner surface of the sleeve and separated axially from one another by a shoulder (24) adapted to retract the stud (18) into its recess, co-operation of the stud (18) and a cavity defining an axial position for the sleeve (7), the distance between the two axial positions thus defined being greater than the distance traversed by the sliding gearwheel (8).

4. A device according to claim 2 or 3, characterised in that the sliding gearwheel (8) is mounted on the sleeve (7) by means of a ring (12) having a low coefficient of friction.

5. A device according to claim 4, characterised in that the frusto-conical surface (13) of the sleeve (7) is provided on the outside at one end of said sleeve while the frusto-conical surface (14) of the sliding gearwheel (8) is provided on an inner surface of said gearwheel, the means (15) for driving the gearwheel by the sleeve comprising an elastic ring (16) anchored in said inner surface of the gearwheel and adapted to co-operate with the end of the sleeve.

6. A device according to claim 2 or 3, characterised in that the sliding gearwheel (8) is mounted directly on the sleeve (7), said sleeve being made more particularly from sintered matter comprising predominantly bronze, the frusto-conical surface (113) of the sleeve being provided inside a frusto-conical ring (25) fitted to one end of the sleeve while the frusto-conical surface (114) of the sliding gearwheel is provided on an outer surface of said gearwheel (8).

7. A device according to claim 6, characterised in that the means for driving the gearwheel (8) by the sleeve (7) comprise an elastic gasket (116) anchored around the sleeve and held in a groove (27) of the gearwheel with an axial clearance.

## Ansprüche

1. Schaltgetriebevorrichtung, insbesondere für Kraftfahrzeuge, mit einem Getriebekasten, in dem folgende Teile montiert sind :
— ein erstes Ritzel (3), das mit einer Antriebswelle fest verbunden ist,
— ein zweites Ritzel (5), das mit einer Hauptwelle fest verbunden ist,
— ein insbesondere dem Rückwärtsgang zugeordnetes, mit dem ersten Ritzel (3) ständig im Eingriff stehendes Schieberitzel (8), das auf einer fest mit dem Getriebekasten verbundenen Achse (6) gleitbar montiert ist und durch ein Mitnehmerorgan verschiebbar ist zwischen einer neutralen Position und einer aktiven Position, in der es (8), mit dem ersten Ritzel im Eingriff stehend, mit dem zweiten Ritzel kämmt,
— Bremsmittel (F) für das Schieberitzel, die zumindest während einer dem Übergang von der neutralen Position in die aktive Position entsprechenden Übergangsphase wirksam sind und eine Muffe (7) umfassen, welche auf der genannten Achse (6) gleitbar montiert sind und die relativ zu dieser Achse mit einer Rotationsbewegung beaufschlagbar sind, welche durch einen mit der Achse fest verbundenen und mit einem axialen Schlitz zusammenwirkenden Finger (9) begrenzt ist, wobei die Muffe eine kegelstumpfförmige Fläche (13, 113) trägt, die mit einer auf dem Schieberitzel ausgebildeten komplementären kegelstumpfförmigen Fläche (14, 114) zusammenwirkt, dadurch gekennzeichnet, daß Abstandsmittel (E) vorgesehen sind, welche die kegelstumpfförmige Fläche (13, 113) der Muffe von derjenigen (14, 114) des Schieberitzels im Abstand halten, wenn letzteres sich in einer neutralen oder aktiven Position befindet.

2. Vorrichtung nach Anspruch 1, dadurch gekennzeichnet, daß das Schieberitzel (8) auf der Muffe (7) montiert ist, daß Mitnehmermittel (15) vorgesehen sind, die ein Mitnehmen der Muffe (7) durch das Schieberitzel mit einem axialen Spiel (j) bewirken, und daß die Abstandsmittel (E) eine Vorrichtung (P) umfassen, mittels derer die Muffe (7) auf der genannten Achse (6) in zwei Positionen positionierbar ist, die durch einen Abstand (D) voneinander getrennt sind, der insbesondere größer ist als der Abstand (d), der von dem Schieberitzel zwischen seiner neutralen Position und seiner aktiven Position durchlaufen wird.

3. Vorrichtung nach Anspruch 2, dadurch gekennzeichnet, daß die Positionierungsvorrichtung (P) einen radial gerichteten Stift (18) umfaßt, der in einer in der genannten Achse vorgesehenen Aufnahme (19) angeordnet und elastisch nach außen vorgespannt ist und dessen abgerundetes äußeres Ende (20) so ausgebildet ist, daß es mit zwei Vertiefungen (22, 23) zusammenwirkt, die an der Innenfläche der Muffe angebracht und in axialer Richtung durch eine Schulter (24) voneinander getrennt sind, durch welche der Stift (18) in seine Aufnahme (19) zurückführbar ist, und daß das Zusammenwirken des Stifts (18) mit einer Vertiefung jeweils eine axiale Position der Muffe (7) bestimmt, wobei der Abstand zwischen den beiden auf diese Weise bestimmten axialen Positionen größer ist als der von dem Schieberitzel (8) durchlaufene Abstand.

4. Vorrichtung nach Anspruch 2 oder 3, dadurch gekennzeichnet, daß das Schieberitzel (8) auf der Muffe (7) unter Zwischenfügung eines Ringes (12) mit niedrigem Reibungskoeffizienten montiert ist.

5. Vorrichtung nach Anspruch 4, dadurch gekennzeichnet, daß die kegelstumpfförmige Fläche (13) der Muffe (7) außen an dem Endbereich dieser Muffe angeordnet ist, während die kegelstumpfförmige Fläche (14) des Schieberitzels (8) auf einer Innenfläche dieses Ritzels vorgesehen ist, und daß die Mitnehmermittel (15) zur Mitnahme des Ritzels durch die Muffe einen elastischen Ring (16) beinhalten, der in dieser Innenfläche des Ritzels verankert ist und mit dem Endbereich der Muffe zusammenwirkt.

6. Vorrichtung nach anspruch 2 oder 3, dadurch gekennzeichnet, daß das Schieberitzel (8) unmittelbar auf der Muffe (7) montiert ist, daß die Muffe aus einem vorwiegend Bronze enthaltenden Sinterwerkstoff besteht und daß die kegelstumpfförmige Fläche (113) der Muffe im Innern eines kegelstumpfförmigen Ringes (25) vorgesehen ist, der an einem Ende der Muffe angesetzt ist, während die kegelstumpfförmige Fläche (114) des Schieberitzels auf einer Außenfläche dieses Ritzels vorgesehen ist.

7. Vorrichtung nach Anspruch 6, dadurch gekennzeichnet, daß die Mitnehmermittel zur Mitnahme des Ritzels durch die Muffe (7) einen elastischen Ring (116) umfassen, der um die Muffe herum verankert und von einer Kehle (27) des Ritzels mit axialem Spiel umgeben ist.

Fig.1.

Fig.2.

Fig.3.

Fig.4.

# Fig.5.